# EUROPÄISCHE PATENTANMELDUNG

(11) **EP 2 544 057 A1**
(43) Veröffentlichungstag der Anmeldung: **09.01.2013**
(21) Anmeldenummer: 11173078.4
(22) Anmeldetag: 07.07.2011
(51) Int. Cl.: G05B 19/042, G06F 17/30

(54) **Verfahren und Vorrichtung zum Abfragen zumindest eines Werts zumindest eines Parameters von einem Modul und Verfahren und Modul zum Bereistellen zumindest eines Wertes zumindest eines Parameters**

(71) Anmelder: SIEMENS AKTIENGESELLSCHAFT, 80333 München (DE)
(72) Erfinder: Scholz, Andreas, 85716 Unterschleißheim (DE)

(57) **Zusammenfassung**

Verfahren und Vorrichtung zum Abfragen zumindest eines Werts zumindest eines Parameters von einem Modul und Verfahren und Modul zum Bereitstellen zumindest eines Wertes zumindest eines Parameters

Die Erfindung betrifft ein Verfahren und eine Vorrichtung zum Abfragen zumindest eines Werts zumindest eines Parameters von eines Modul und ein Verfahren und ein Modul zum Bereistellen zumindest eines Wertes zumindest eines Parameters. Hierbei wird ein Basisschema um zumindest eine Abfragefunktion in ein Schema erweitert, wobei durch das Schema sowohl eine Konfiguration des Moduls als auch eine Abfrage einzelner oder mehrerer Werte ermöglicht wird.

## Beschreibung

Die Erfindung betrifft ein Verfahren und eine Vorrichtung zum Abfragen zumindest eines Werts zumindest eines Parameters von einem Modul und ein Verfahren und ein Modul zum Bereistellen zumindest eines Wertes zumindest eines Parameters.

In der Automatisierung und in der Energiedistribution werden mehr und mehr Geräte eingesetzt, die an örtliche Gegebenheiten angepasst werden können und müssen. Hierzu werden Konfigurationsinformationen erzeugt, mit denen die Geräte konfiguriert werden.

So können diese Konfigurationsinformationen mit Hilfe von XML (XML- Extensible Markup Language) auf flexible und erweiterbare Weise dargestellt werden. Nachfolgend ist ein strukturiertes Dokument in XML [5, 6, 7] dargestellt, welches verschiedene Parameter für einen Sensor bereitstellt:

```
 <Knoten>
  <Sensoren>
    <TemperaturSensor id="123">
      <Messrate>2</Messrate>
      <Genauigkeit>0.1</Genauigkeit>
...
    </TemperaturSensor>
    <Drucksensor>
    </Drucksensor>
  </Sensoren>
  <Aktoren>
  <Aktoren>
...
 </Knoten>
```

Hier umfasst das Gerät einen Knoten, an dem Sensoren und Aktoren registriert sind. Das Gerät weist mehrere Sensoren auf, unter Anderem einen Temperatursensor. Dieser Sensor hat einen Konfigurationsparameter - kurz Parameter - "Messrate", der angibt, wie oft pro Sekunde ein Messwert ermittelt werden soll. Ferner kann der Sensor weitere Parameter bereitstellen, wie beispielsweise "Genauigkeit", wobei dieser Parameter die Genauigkeit des Sensors anzeigt. Im obigen Beispiel werden zwei Messwerte pro Sekunde mit einer Genauigkeit von 0,1 Grad ermittelt.

Neben der Konfiguration des Geräts ist auch das Auslesen von Parametern des Geräts, z.B. dem Messwert des Temperatursensors, notwendig. Hierzu wird beispielsweise eine Abfragesprache XPATH [1] verwendet, die Anfragen an das Gerät in Anlehnung an die obige Struktur mittels Pfadausdrücken stellt. Um auf die Messrate im obigen Beispiel zuzugreifen könnte der folgende XPATh-Ausdruck genutzt werden:
/Knoten/Sensoren/TemperaturSensor/Messrate

Nachteilig bei der Verwendung von XPATH ist, dass das Gerät sowohl ein erstes Verfahren zum Konfigurieren der Parameter als auch ein zweites Verfahren zum Abrufen der Parameter unterstützen muss. Insbesondere für kleine Geräte mit sehr begrenztem Speicherplatz und sehr geringer Rechenleistung, wie Mikrocontroller mit 2KByte Speicher, 5KByte Programmcode und einer Rechenleistung von 1 MIPS (MIPS - Million Instructions Per Second), ist eine Verwendung von XPATH nahezu ausgeschlossen.

Eine weitere bekannte Sprache zum Abfragen von Datenstrukturen ist Query-by-Example, siehe Dokument [4].

Daher stellt sich die Aufgabe für Geräte, die mit Hilfe von strukturierten Dokumenten, wie bspw. XML, konfiguriert werden, Verfahren, Vorrichtungen und Module vorzusehen, die eine Abfrage von Konfigurationsparameter in einfacher und effizienter Weise ermöglichen.

Diese Aufgabe wird durch die unabhängigen Ansprüche gelöst. Weiterbildungen der Erfindung sind den anhängigen Ansprüchen zu entnehmen.

Die Erfindung betrifft ein Verfahren zum Abfragen zumindest eines Wertes zumindest eines Parameters von einem Modul, wobei mittels eines Basisschemas der zumindest eine Parameter als Element beschreibbar ist und mittels einer Werteausprägung des Elements zumindest einer der Parameter konfiguriert werden kann, mit folgenden Schritten:
- Generieren eines Schemas durch Ergänzen des Basisschemas um eine Abfragefunktion derart, dass das Element des zumindest einen Parameters, dessen zumindest eine Wert abgefragt werden soll, mittels der Abfragefunktion markierbar ist;
- Erzeugen eines ersten strukturierten Dokuments auf Basis des Schemas derart, dass das erste strukturierte Dokument sowohl zumindest dasjenige Element für den zumindest einen Parameter aufweist, dessen zumindest eine Wert abgefragt werden soll, als auch diesem Element die Abfragefunktion zuordnet;
- Abfragen des zumindest einen Wertes des zumindest einen Parameters mittels des ersten strukturierten Dokuments, wobei der zumindest eine Parameter aufgrund der Abfragefunktion dem Modul mitteilbar und der zumindest eine Wert des zumindest einen Parameters hieraufhin auslesbar ist.

Das Verfahren zeigt den Vorteil, dass die Abfrage, so wie die Konfiguration des Moduls, als strukturiertes Dokument auf Basis nur eines Schemas erfolgen kann, da die zu konfigurierenden als auch abzufragenden Parameter durch das Schema konfiguriert und abgefragt werden können. Hierdurch muss auf dem Modul außer einem Parser für strukturierte Dokumente kein weiterer Parser, wie XPATH, implementiert werden. Dadurch werden Ressourcen, wie Speicherplatz oder Rechenleistung für den weiteren Parser, auf dem Modul eingespart.

Unter einem strukturierten Dokument ist ein Dokument in textueller oder binärer Form zu verstehen, das auf Basis des Schemas erzeugt wird. Sowohl die textuelle als auch die binäre Form können auf einer Beschreibungssprache XML (XML- Extensible Markup Language) [5, 6, 7] basieren. Die binäre Form folgt vorzugsweise den Standards BIM [2] oder EXI [3].

In einer ersten Erweiterung wird die Abfragefunktion mittels einer besonderen Werteausprägung der Werteausprägung des Elements bereitgestellt. Hierdurch ist eine einfache Signalisierung der Abfragefunktion möglich. Als besondere Werteausprägung können spezifische Zahlen und Zeichen dienen. Ferner kann die besondere Werteausprägung dadurch realisiert werden, dass lediglich das Element signalisiert wird, jedoch die Werteausprägung weggelassen wird.

Wird ferner ein Inhalt der besonderen Werteausprägung je Element spezifisch gewählt, muss auf bestehende Wertebereiche der Werteausprägungen anderer im ersten strukturierten Dokument verwendeter Elemente keine Rücksicht genommen werden. Dies möglicht eine besonders effiziente Kodierung. Wird alternativ ein Inhalt der besonderen Werteausprägung für alle Elemente einheitlich gewählt, so kann der Parser für das strukturierte erste Dokument einfach realisiert werden, da der Parser lediglich auf einen einzigen Inhalt bei allen abzufragenden Elementen bzgl. der Abfragefunktion reagieren muss.

Ferner kann ein drittes Attribut dem Element derart zugeordnet werden, dass das dritte Attribut die besondere Werteausprägung explizit angibt. Hierdurch kann die besondere Werteausprägung dynamisch angepasst werden.

In einer zweiten Erweiterung wird die Abfragefunktion mittels eines ersten Attributs des Elements bereitgestellt. Hierdurch wird eine einfache Realisierung der Abfragefunktion ermöglicht. Zudem kann die zweite Erweiterung eingesetzt werden, falls der Wertebereich der Werteausprägung des Elements keine besondere Werteausprägung zulässt oder eine Kodierung der besonderen Werteausprägung nur mit großem Aufwand möglich ist.

Vorzugsweise wird zur Spezifizierung einer Ausführung der Abfragefunktion das Element des Schemas um zumindest ein zweites Attribut ergänzt. Hiermit kann die Ausführung der Abfrage des Parameters über das erste Dokument gesteuert werden. Insbesondere wird durch das zumindest eine zweite Attribut eine Anzahl an Ebenen in dem durch die Elemente des ersten strukturierten Dokuments aufgespannten Baum signalisiert, für die die Wertausprägungen als Wert der Parameter zurückgegeben werden sollen. Hierdurch kann die Bereitstellung des zumindest einen Wertes spezifisch gesteuert werden, um bspw. einen zur Bereitstellung des zumindest einen Wertes benötigten Speicherplatzes gering zu halten.

In vorteilhafter Weise wird eine Antwort auf die Abfrage des zumindest einen Wertes mittels eines zweiten strukturierten Dokuments durchgeführt, das auf Basis des Schemas erzeugt wird und zumindest die zu dem zumindest einen Wert korrespondierende Werteausprägung zusammen mit dem dazugehörigen Element aufweist. Hierdurch wird eine Abfrage des zumindest einen Wertes weiter vereinfacht werden, da die Antwort auf die Abfrage, so wie die Abfrage, mit Hilfe eines strukturierten Dokuments auf Basis des Schemas erzielt wird.

Vorzugsweise wird zumindest eines der strukturierten Dokumente in textueller Form erzeugt, wodurch eine gute Lesbarkeit durch den Parser bereitgestellt wird.

Alternativ dazu kann zumindest eines der strukturierten Dokumente entweder (i) in binärer Form oder (ii) zunächst textueller Form und dann durch Kodierung mittels eines Text-zu-Binär Kodierers in binärer Form erzeugt werden, wobei die binäre Form insbesondere nach einem der Standards BIM oder EXI realisiert wird. Hierdurch wird die Abfrage des zumindest einen Wertes mit Hilfe der binären Form sehr kompakt codiert und kann auf dem Modul ressourcenschonend, d.h. reduzierter Speicherplatz und reduzierte Rechenleistung, implementiert und ausgeführt werden. Die binäre Kodierung gemäß EXI [3] oder BIM [2] ermöglicht, dass ein Parser des strukturierten Dokuments in binärer Form direkt auf den binären Daten, d.h. ohne Decodierung von der binären zu der textuellen Form, operieren kann.

In einer vorzugsweisen Erweiterung wird zumindest eines der strukturierten Dokumente und/oder das Schema gemäß einer Beschreibungssprache XML [5, 6, 7] erzeugt. Durch den Einsatz einer standardisierten Beschreibungssprache kann eine kostengünstige Realisierung erreicht werden, da bei der Implementierung auf bestehende Module zurückgegriffen werden kann.

Die Erfindung betrifft ferner ein Verfahren zum Herstellen eines Schemas zum Abfragen zumindest eines Wertes zumindest eines Parameters eines Moduls, wobei mittels eines Basisschemas der zumindest eine Parameter als Element beschreibbar ist und mittels einer Werteausprägung des Elements zumindest einer der Parameter konfiguriert werden kann, wobei das Schema durch Ergänzen des Basisschemas um eine Abfragefunktion derart erzeugt wird, dass das Element des zumindest einen Parameters, dessen zumindest eine Wert abgefragt werden soll, mittels der Abfragefunktion markierbar ist. Hierdurch wird ein Konfigurieren und Abfragen von zumindest einem Wert des zumindest einen Parameters des Moduls auf Basis eines einzigen Schemas erzielt, die mit Hilfe eines einzigen Parsers für strukturierte Dokumente realisiert werden können ohne einen zusätzlichen Parser, wie XPATH, implementierten zu müssen. Somit wird eine Realisierung mit geringem Speicherbedarf ermöglicht. Zudem kann das Herstellverfahren gemäß einem der Erweiterungen des Verfahrens zum Abfragen erweitert werden. Die Vorteile sind analog zu den bezüglich des Verfahrens zum Abfragen.

Des Weiteren betrifft die Erfindung eine Vorrichtung zum Abfragen zumindest eines Wertes zumindest eines Parameters von einem Modul, wobei mittels eines Basisschemas der zumindest eine Parameter als Element beschreibbar ist und mittels einer Werteausprägung des Elements zumindest einer der Parameter konfiguriert werden kann, mit folgenden Mitteln:
- Erstes Mittel zum Generieren eines Schemas durch Ergänzen des Basisschemas um eine Abfragefunktion derart, dass das Element des zumindest einen Parameters, dessen zumindest eine Wert abgefragt werden soll, mittels der Abfragefunktion markierbar ist;
- Zweites Mittel zum Erzeugen eines ersten strukturierten Dokuments auf Basis des Schemas derart, dass das erste strukturierte Dokument sowohl zumindest dasjenige Element für den zumindest einen Parameter aufweist, dessen zumindest eine Wert abgefragt werden soll, als auch diesem Element die Abfragefunktion zuordnet;
- Drittes Mittel zum Abfragen des zumindest einen Wertes des zumindest einen Parameters mittels des ersten strukturierten Dokuments, wobei der zumindest eine Parameter aufgrund der Abfragefunktion dem Modul mitteilbar und der zumindest eine Wert des zumindest einen Parameters hieraufhin auslesbar ist. Diese Vorrichtung kann ferner mittels zumindest eines vierten Mittels erweitert werden, das derart ausgestaltet ist, dass damit zumindest einer der Verfahrensschritte gemäß vorstehender Ausführungen zum Verfahren zum Abfragen durchführbar ist.

Die Vorrichtung und ihre Erweiterungen weisen dieselben Vorteile auf, wie die jeweils korrespondierenden Schritte bzgl. des Verfahrens zum Abfragen.

Die Erfindung betrifft überdies ein Verfahren zum Bereitstellen zumindest eines Wertes zumindest eines Parameters durch ein Modul, wobei mittels eines Basisschemas der zumindest eine Parameter als Element beschreibbar ist und mittels einer Werteausprägung des Elements zumindest einer der Parameter konfiguriert werden kann, mit folgenden Schritten:
- Empfangen eines ersten strukturierten Dokuments auf Basis eines Schemas, wobei das Schema durch Ergänzen des Basisschemas um eine Abfragefunktion derart generiert ist, dass das Element des zumindest einen Parameters, dessen zumindest eine Wert abgefragt werden soll, mittels der Abfragefunktion markierbar ist und das erste strukturierte Dokument sowohl zumindest dasjenige Element für den zumindest einen Parameter aufweist, dessen zumindest eine Wert abgefragt werden soll, als auch diesem Element die Abfragefunktion zuordnet;
- Bereitstellen des zumindest einen Wertes des zumindest einen Parameters aufgrund des Empfangs des ersten strukturierten Dokuments derart, dass aufgrund der Abfragefunktion das Element und der zu dem Element korrespondierende Parameter ermittelt und der zumindest eine Wert des zumindest einen Parameters, insbesondere in einem zweiten strukturierten Dokument, bereitgestellt wird.

Das Verfahren zum Bereitstellen kann anlog zum Verfahren zum Abfragen erweitert werden. Das Verfahren zum Bereitstellen und die jeweiligen Erweiterungen weisen dieselben Vorteile wie die jeweiligen Schritte des Verfahrens zum Abrufen auf.

Schließlich betrifft die Erfindung ein Modul zum Bereitstellen zumindest eines Wertes zumindest eines Parameters durch ein Modul, wobei mittels eines Basisschemas der zumindest eine Parameter als Element beschreibbar ist und mittels einer Werteausprägung des Elements zumindest einer der Parameter konfiguriert werden kann, mit folgenden Einheiten:
- Erste Einheit zum Empfangen eines ersten strukturierten Dokuments auf Basis eines Schemas, wobei das Schema durch Ergänzen des Basisschemas um eine Abfragefunktion derart generiert ist, dass das Element des zumindest einen Parameters, dessen zumindest eine Wert abgefragt werden soll, mittels der Abfragefunktion markierbar ist und das erste strukturierte Dokument sowohl zumindest dasjenige Element für den zumindest einen Parameter aufweist, dessen zumindest eine Wert abgefragt werden soll, als auch diesem Element die Abfragefunktion zuordnet;
- Zweite Einheit zum Bereitstellen des zumindest einen Wertes des zumindest einen Parameters aufgrund des Empfangs des ersten strukturierten Dokuments derart, dass aufgrund der Abfragefunktion das Element und der zu dem Element korrespondierende Parameter ermittelt und der zumindest eine Wert des zumindest einen Parameters, insbesondere in Form eines zweiten strukturierten Dokuments, bereitgestellt wird.

Dieses Modul kann ferner mittels zumindest einer dritten Einheit erweitert werden, das derart ausgestaltet ist, dass damit zumindest einer der Verfahrensschritte gemäß vorstehender Ausführungen zum Verfahren zum Bereitstellen durchführbar ist.

Das Modul und ihre Erweiterungen weisen dieselben Vorteile auf, wie die jeweils korrespondierenden Schritte bzgl. des Verfahrens zum Bereistellen.

Die Erfindung und ihre Weiterbildungen werden nachfolgend anhand von Zeichnungen näher erläutert. Im Einzelnen zeigen:
- Figur 1: Basisschema zur Konfiguration eines Moduls
- Figur 2: Schema zum Konfiguratieren und Abfragen von zumindet einem Wert zumindest eines Parameters des Moduls ermöglicht
- Figur 3: Konfigurieren des Moduls mittels eines strukturierten Dokuments
- Figur 4: Kodierung des strukturierten Dokuments von einer textuellen Form in eine binäre Form und Dekodierung des strukturierten Dokuments von einer binären in eine textuelle Form.
- Figur 5A/B: Erstes Beispiel einer Abfrage mittels eines ersten strukturierten Dokuments und einer Bereit- Stellung mittels eines zweiten strukturierten Dokuments
- Figur 6: Zweites Beispiel einer Abfrage
- Figur 7A/B: Drittes Beispiel einer Abfrage von Werten mehrerer Parameter und Bereitstellung der Werte
- Figur 8A/B: Viertes Beispiel zum Abfragen und Bereitstellen von Werten mehrerer Parameter
- Figur 9A/B: Fünftes Beispiel zum Abfragen und Bereitstellen von Werten mehrerer Parameter unter Verwendung eines zweiten Attributs zur Spezifizierung einer Ausführung der Abfrage
- Figur 10: Eine Vorrichtung zum Abfragen zumindest eines Wertes zumindest eines Parameters
- Figur 11: Ein Modul zum Bereitstellen zumindest eines Wertes zumindest eines Parameters

Elemente mit gleicher Funktion und Wirkungsweise sind in den Figuren mit denselben Bezugszeichen versehen.

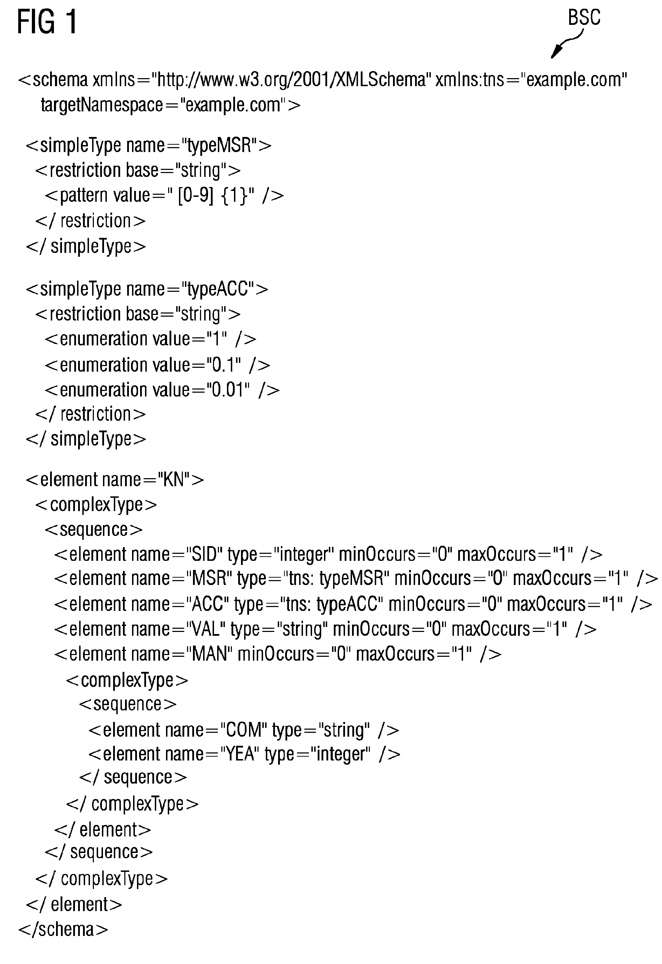

Figur 1 zeigt ein Basisschema BSC zur Konfiguration eines Moduls, welches gleichbedeutend mit dem auch verwendeten Begriff Gerät ist. Dieses Basisschema basiert auf einer Sprache XML (XML- Extensible Markup Language). Die einzelnen Elemente repräsentieren dabei folgende Konfigurationsparameter - im Folgenden auch Parameter genannt:
- Elementname: Parameter
- KN: Knoten
- SID: Sensoridentifikation
- MSR: Messrate (Anzahl an Messwerten pro Sekunde)
- ACC: Genauigkeit (der Messwerte)
- VAL: Messwert
- MAN: Herstellerinformationen
- COM: Herstellername
- YEA: Herstellungsjahr

Dieses Basisschema gemäß XML (Extended Markup Language) [5, 6, 7] weist Werteausprägungen der Elemente auf, die einen Wert für den zum Element korrespondierenden Parameter wiedergeben. XML definiert dazu Standard-Datentypen, wie string oder integer. Daneben können auch eigene neue Datentypen erzeugt werden, wie beispielsweise typeACC, der für das Element ACC die Werteausprägungen 1, 0.1, und 0.01 zulässt. Das Element ACC wird definiert, wie viele Stellen nach dem Komma der Parameter Messwert seinen Wert anzeigt, also mit 0, 1 oder zwei Stellen nach dem Komma.

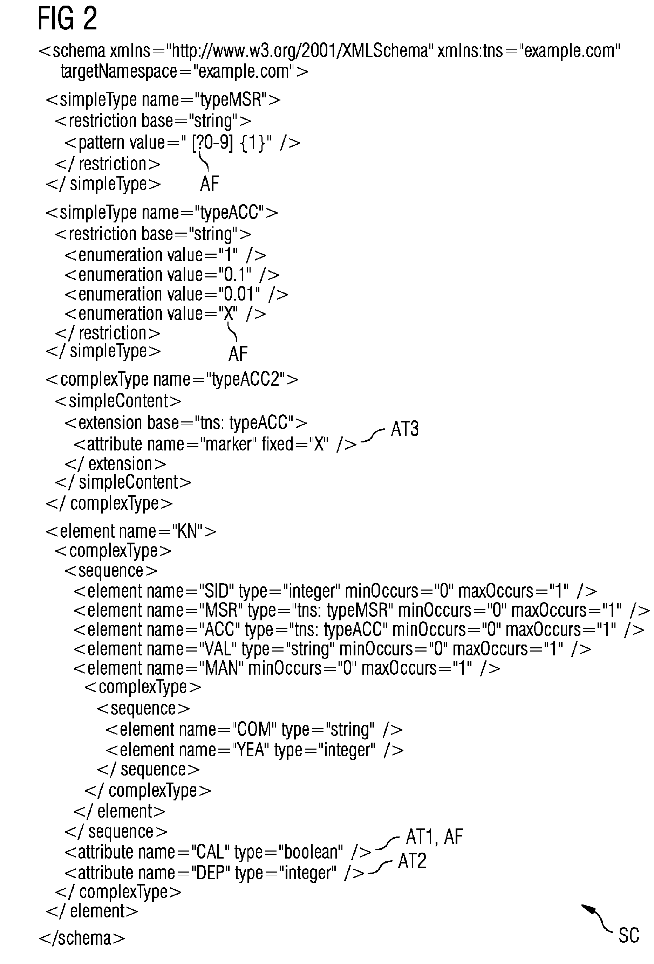

Figur 2 zeigt ein Schema SC gemäß XML, das zum Schema aus Figur 1 um eine Abfragefunktion AF erweitert wurde. Die Bedeutung der in dem Basisschema aus Figur 1 erläuterten Elemente und Werteausprägungen bleibt im Schema aus Figur 2 erhalten. Mit Hilfe der Abfragefunktion wird dem, dem Parameter zugeordneten, Element eine Markierung zugewiesen, die angibt, dass der Wert dieses Parameters abgefragt werden soll. Zum einen lassen folgende Datentypen nun die Möglichkeit zu ein weiteres Zeichen zu definieren, wobei das weitere Zeichen eine besondere Werteausprägung darstellt, mit der die Abfrage des durch den Datentypen konstruierten Elements signalisiert wird:
- Datentyp: besondere Werteausprägung VSP
- typeMSR: "?"
- typeACC: "X"

Zudem kann der Messwert implizit mittels der besonderen Werteausprägung "#" des Elements VAL abgefragt werden. Diese besondere Werteausprägung wird bei einer Messung nicht auftreten, so dass neben der expliziten Angabe wie in den obigen Datentypen auch eine implizite Definition der besonderen Werteausprägung derart erfolgen kann, dass die besondere Werteausprägung einen Wert einnimmt, der durch den Parameter des Geräts nicht erreicht wird. Zudem kann das Element und/oder der Datentyp um ein drittes Attribut ergänzt werden, welches die besondere Wertausprägung definiert. Ein Beispiel hierzu zeigt ein Datentyp typeACC2, der den bestehenden Datentypen typeACC um das dritte Attribut ergänzt. Dieses dritte Attribut spezifiziert die Werteausprägung "X" als Abfragefunktion.

Anstelle von unterschiedlichen besonderen Werteausprägungen kann auch eine Zahl oder Zeichen die besondere Werteausprägung repräsentieren, wie beispielsweise "?". Bei den besonderen Werteausprägungen gehören die Anführungszeichen nicht zur Werteausprägung. Diese werden lediglich zur besseren Lesbarkeit der Beschreibung angegeben.

Daneben weist in Figur 2 das Element KN noch ein erstes Attribut AT1 als Abfragefunktion AF auf, das einen Abfragewunsch des Elements KN - also des Wertes des Parameters Knoten - angibt. Das erste Attribut AT1 mit einem Namen CAL kann die Werte 0 und 1 annehmen. Der Wert 1 signalisiert, dass der Wert für das Element KN abgefragt wird.

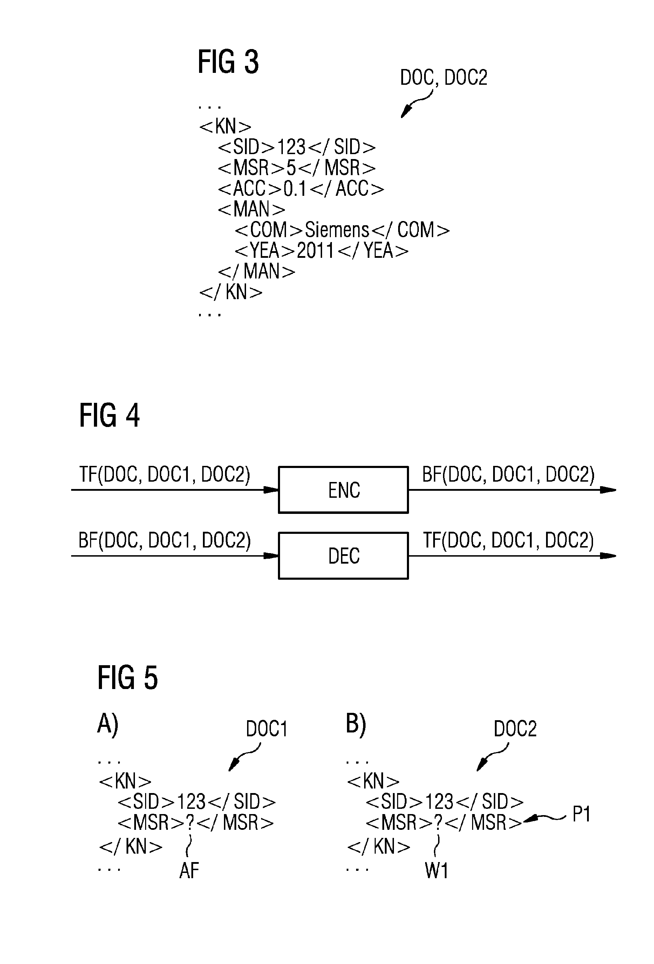

Die nachfolgenden Figuren 3 bis 9 zeigen Ausführungsbeispiele der Erfindung in Form eines Teils eines strukturierten, z.B. XML-basierten, Dokuments DOC.

Figur 3 zeigt das strukturierte Dokument DOC unter Berücksichtung des Schemas SC, welches die Konfigurationsdaten zeigt. Dabei werden folgende Werte zur Konfiguration von Parametern gesetzt:

| | |
|---|---|
| Parameter | Wert |
| Sensoridentifikation | 123 |
| Messrate | 5 |
| Auflösung | 0.1 |
| Herstellername | Siemens |
| Herstellungsjahr | 2011 |

Figur 3 und Folgende zeigen jeweils eine textuelle Form TF des jeweiligen strukturierten Dokuments. Alternativ dazu kann das jeweilige strukturierte Dokument auch in einer binären Form erzeugt werden. Dies kann zum einen dadurch erfolgen, dass das jeweilige strukturierte Dokument direkt in einer binären Form generiert wird. Zum anderen kann zunächst das jeweilige strukturierte Dokument in seiner textuellen Form erzeugt und dann unter Anwendung eines XML-zu-Binär Kodieres, z.B. nach einem Standard BIM [2] oder EXI [3], in eine binäre Form BF kodiert bzw. komprimiert werden. Der XML-Binär Kodierer ENC formt die textuelle Form des strukturierten Dokuments DOC in eine binäre Form um, um ein Datenvolumen zu reduzieren. Jedoch bleiben Aufbau und Inhalt des ersten Dokumentes erhalten bzw. sind rekonstruierbar. Figur 4 zeigt diese Kodierung exemplarisch. Eine Dekodierung erfolgt analog zur Kodierung mittels eines Decoders DEC, z.B. eines Binär-zu-XML Decoders.

Um die aktuelle Messrate beim Gerät abzufragen wird die Abfragefunktion AF mittels der besonderen Werteausprägung "?" im Element MSR aktiviert. Ein erstes strukturiertes Dokument DOC1 auf Basis des Schemas SC ist in Figur 5A zu sehen, das die Abfragefunktion aufweist. Hierbei wird die Sensoridentifikation angegeben, um den Sensor im Gerät zu adressieren, falls es mehrere Sensoren gibt. Die Werteausprägung des Elements MSR wird gemäß der besonderen Werteausprägung auf "?" gesetzt. Auch das erste strukturierte Dokument DOC1 kann in textueller Form und binärer Form kodiert werden. Nach Empfang des ersten strukturierten Dokuments erkennt das Modul/Gerät, dass die besondere Werteausprägung für das Element MSR gesetzt ist und damit der Wert des Parameters Messrate ausgelesen und an eine Abfrageeinheit übertragen werden soll. Der auszulesende Wert kann in ein zweites strukturiertes Dokument DOC2 gemäß dem Schema SC eingetragen an die Abfrageinheit übertragen werden, siehe Figur 5B. Es ist auch möglich als zweites strukturiertes Dokument das erste strukturierte Dokument, in textueller oder binärer Form, zu verwenden und dabei die besondere Werteausprägung durch den angefragten Wert zu ersetzen.

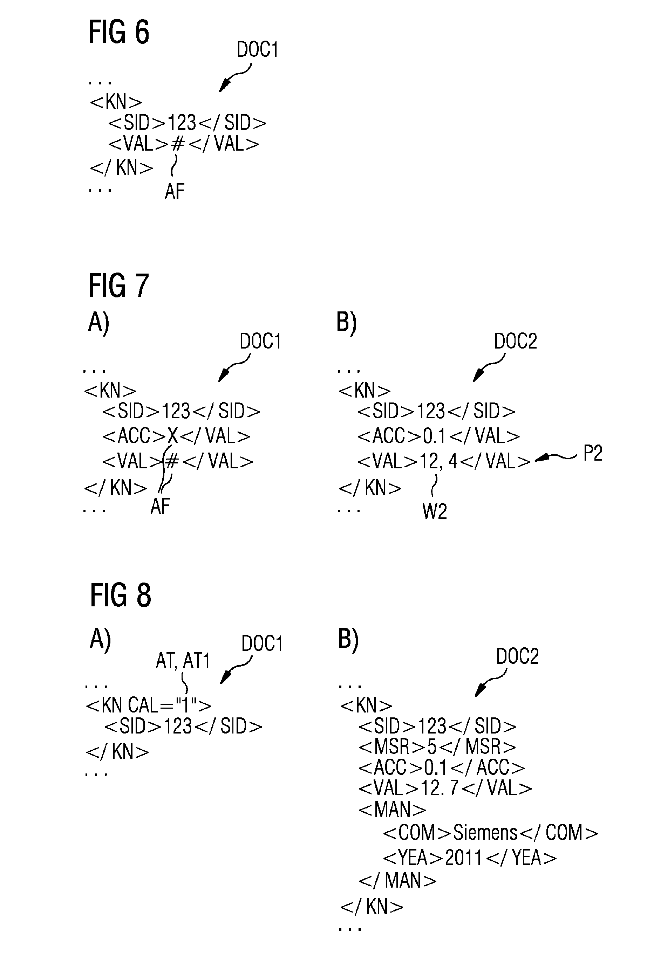

Analog zur Abfrage der Messrate kann der Messwert, siehe Figur 6, abgefragt werden. Hierbei wird als besondere Werteausprägung das Zeichen "#" im Element VAL gesetzt.

Neben der Abfrage einzelner Werte der Parameter können auch mehrere Werte auf einmal abgefragt werden. In dem Abfragedokument gemäß Figur 7A werden der Messwert und die Genauigkeit zusammen abgefragt. Hierzu werden jeweils die Elemente SID, ACC und VAL mit den dazugehörigen speziellen Werteausprägungen im zweiten Dokument signalisiert. Das weitere Vorgehen ist analog zu obiger Beschreibung. Das zweite strukturierte Dokument gemäß Figur 7B zeigt das Bereitstellen der Werte angefragten Parameter.

Figur 8A zeigt ein weiteres Ausführungsbeispiel, bei dem die Abfragefunktion mittels des ersten Attributs CAL erfolgt. Hierbei werden alle Parameter des Knotens mit der Sensoridentifikation "123" ausgelesen. Die bereitgestellten Werte der angefragten Parameter sind in Figur 8B zu sehen.

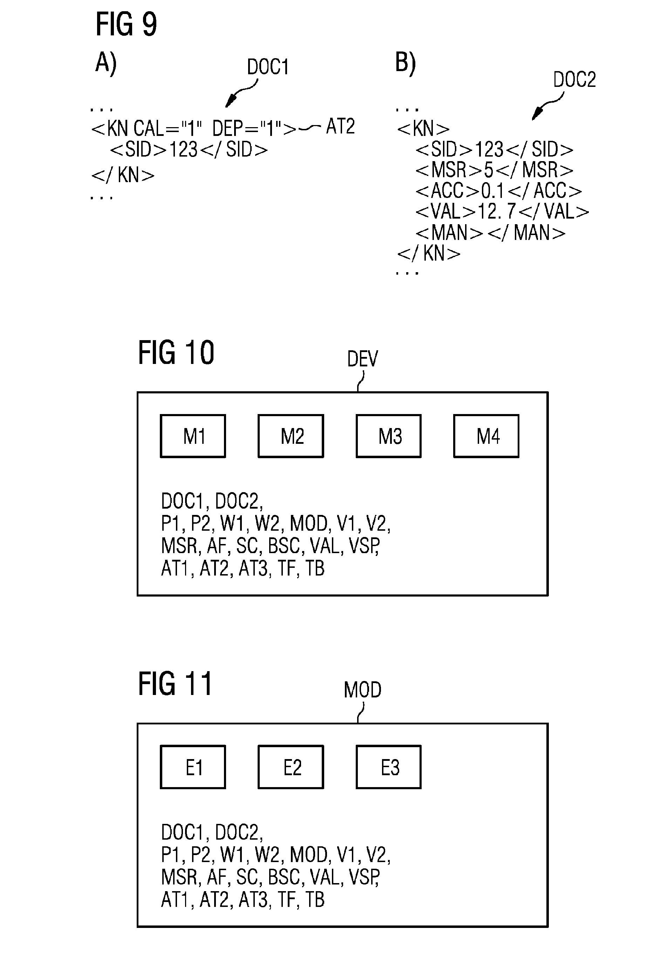

Figur 9A zeigt eine Modifikation des Ausführungsbeispiels gemäß Figur 8A, bei dem zusätzlich zur Abfragefunktion eine Ausführung der Abfrage mittels eines zweiten Attributs AT2 durchgeführt wird. Dieses zweite Attribut mit einem Namen DEP gibt an, wie viele Ebenen, gezählt ab der aktuellen Ebene durch die Abfrage in dem zweiten strukturierten Dokument zurückgegeben werden sollen. In Figur 9A hat DEP den Wert 1, wodurch nur die Werte der Parameter der aktuellen Ebene ausgelesen werden. Das zweite strukturierte Dokument in Figur 9B zeigt das Abfrageergebnis. Im Allgemeinen beschreibt das zweite strukturierte Dokument einen hierarchischen Baum, der durch das Schema definiert ist. Hierbei umfasst die aktuelle Ebene des Elements KN alle Elemente, die direkt von dem Element KN stammen. Ein Wert 2 für das zweite Attribut mit dem Namen DEP schließt alle Elemente der aktuellen Ebene und Kindelemente der Elemente der aktuellen Ebene ein.

Schließlich besteht eine Erweiterung der obigen Ausführungsbeispiele darin, dass die Sensoridentifikation, also das Element SID, in dem Anfragedokument nicht spezifiziert wird. Hierdurch wird die Anfrage alle Knoten betreffen, die in dem Gerät instantiiert sind (nicht durch eine Zeichnung dargestellt).

Figur 10 zeigt eine Vorrichtung DEV zum Abfragen eines Wertes W1, W2 zumindest eines Parameters P1, P2 von einem Modul MOD, mit folgenden Mitteln M1, M2, M3:
- Erstes Mittel M1 zum Generieren eines Schemas SC, das die konfigurierbaren Parameter P1, P2 des Moduls als Elemente MSR, VAL und den zu dem jeweiligen Parameter P1, P2 dazugehörigen Wert W1, W2 als Werteausprägung V1, V2 referenziert und das Element MSR des zumindest einen Parameters P1, dessen Wert W1 abgefragt werden soll, mittels einer Abfragefunktion AF markiert;
- Zweites Mittel M2 zum Erzeugen eines ersten strukturierten Dokuments DOC1 auf Basis des Schemas SC derart, dass dieses sowohl zumindest dasjenige Element MSR für den Parameter P1 aufweist, der abgefragt werden soll, als auch diesem Element MSR die Abfragefunktion AF zuordnet,
- Drittes Mittel M3 zum Abfragen des Wertes W1 des zumindest einen Parameters P1 mittels des ersten strukturierten Dokuments DOC1, wobei der zumindest eine Parameter P1 aufgrund der Abfragefunktion AF dem Modul MOD mittelbar und der Wert W1 des zumindest einen Parameters P1 auslesbar ist.

Zudem verfügt die Vorrichtung DEV über zumindest ein viertes Mittel M4, das derart ausgestaltet ist, dass damit zumindest eines der Erweiterungen des Verfahrens durchführbar ist.

Figur 11 zeigt ferner das Modul MOD zum Bereistellen eines Wertes W1 zumindest eines Parameters P1 mit folgenden Einheiten E1, E2:
- Erste Einheit E1 zum Empfangen eines ersten strukturierten Dokuments DOC1 auf Basis eines Schemas SC, wobei das erste strukturierte Dokument DOC1 sowohl zumindest dasjenige Element MSR für den Parameter P1 aufweist, der abgefragt werden soll, als auch diesem Element MSR die Abfragefunktion AF zuordnet, das Schema SC die Parameter P1 des Moduls MOD beschreibt und eine Abfragefunktion AF derart definiert, dass mit Hilfe der Abfragefunktion AF das dem zumindest einen Parameter P1 zugeordnete Element MSR markierbar ist, dessen Wert abgefragt werden soll;
- Zweite Einheit E2 zum Bereitstellen des zumindest einen Wertes W1 des zumindest einen Parameters P1 aufgrund des Empfangs des ersten strukturierten Dokuments DOC1 derart, dass aufgrund der Abfragefunktion AF das Element MSR und der zu dem Element MSR korrespondierende Parameter P1 ermittelt und der Wert W1 des zumindest einen Parameters P1, insbesondere in Form eines zweiten strukturierten Dokuments DOC2, bereitgestellt wird.

Ferner kann das Modul MOD über zumindest eine dritte Einheit E3 verfügen, die derart ausgestaltet ist, dass damit zumindest Erweiterungen bei der Bereitstellung realisierbar sind.

Die Mittel M1, M2, M3, M4 der Vorrichtung und die Einheiten E1, E2 und E3 des Moduls können in Hardware, Software oder in einer Kombination aus Hard- und Software ausgeführt werden. Beispielsweise führt ein Prozessor die als Programmcode in einem an den Prozessor angegliederten Speicher abgelegten Schritte des Verfahrens aus. Ferner verfügt der Prozessor über eine Ein- und Ausgabeschnittstelle zum Austausch des ersten und zweiten strukturierten Dokuments, ggfs. nach deren Text-zu-Binär Kodierung - zum Konfigurieren des Moduls, Abfragen von Parameterwerten des Moduls und Empfangen von abgefragten Parameterwerten von dem Modul. Zudem können Zwischenergebnisse der einzelnen Verarbeitungsschritte Speicher zusätzlich abgelegt werden. Des Weiteren können die Mittel M1, M2, M3, M4 und die Einheiten E1, E2, E3 des Moduls auch durch eine feste Verdrahtung von elektronischen Bauteilen mit einem Speichermodul realisiert werden.

Die Erfindung und ihre Weiterbildung wurden anhand mehrerer Beispiele erläutert. Die Erfindung ist jedoch nicht nur auf die Beispiele beschränkt. Zudem können die Ausführungsbeispiele auch kombiniert werden.

### Literatur

[1] XML Path Language (XPath), Version 1.0, W3C Recommendation 16 November 1999, http://www.w3.org/TR/xpath/; W3C
[2] Information technology - MPEG systems technologies-Part 1: Binary MPEG format for XML, ISO/IEC FDIS 23001-1:2005(E), ISO/IEC JTC 1/SC 29/WG 11, w7597, 4. November 2005
[3] J. Schneider and T. Kamiya. Efficient XML Interchange (EXI) Format 1.0. W3C Working Draft, 19 September 2008
[4] Query-By-Example, http://en.wikipedia.org/wiki/Query by Example, Stand: 6 Juli 2011
[5] David C. Fallside (IBM); XML Schema Part 0: Primer; http://www.w3.org/TR/2001/REC-xmlschema-0-20010502/; www.w3.org; W3C
[6] Henry S. Thompson et al.; XML Schema Part 1: Structures; http://www.w3.org/TR/2001/REC-xmlschema-1-20010502/; www.w3.org; W3C
[7] Paul V. Biron; XML Schema Part 2: Datatypes; http://www.w3.org/TR/2001/REC-xmlschema-2-20010502/; www.w3.org; W3C

## Patentansprüche

1. Verfahren zum Abfragen zumindest eines Wertes (W1, W2) zumindest eines Parameters (P1, P2) von einem Modul (MOD), wobei mittels eines Basisschemas (BSC) der zumindest eine Parameter (P1, P2) als Element (MSR, VAL) beschreibbar ist und mittels einer Werteausprägung (V1, V2) des Elements (MSR, VAL) zumindest einer der Parameter (P1, P2) konfiguriert werden kann,
mit folgenden Schritten:
- Generieren eines Schemas (SC) durch Ergänzen des Basisschemas (BSC) um eine Abfragefunktion (AF) derart, dass das Element (MSR) des zumindest einen Parameters (P1), dessen zumindest eine Wert (W1) abgefragt werden soll, mittels der Abfragefunktion (AF) markierbar ist;
- Erzeugen eines ersten strukturierten Dokuments (DOC1) auf Basis des Schemas (SC) derart, dass das erste strukturierte Dokument (DOC1) sowohl zumindest dasjenige Element (MSR) für den zumindest einen Parameter (P1) aufweiset, dessen zumindest eine Wert (W1) abgefragt werden soll, als auch diesem Element (MSR) die Abfragefunktion (AF) zuordnet;
- Abfragen des zumindest einen Wertes (W1) des zumindest einen Parameters (P1) mittels des ersten strukturierten Dokuments (DOC1), wobei der zumindest eine Parameter (P1) aufgrund der Abfragefunktion (AF) dem Modul (MOD) mitteilbar und der zumindest eine Wert (W1) des zumindest einen Parameters (P1) hieraufhin auslesbar ist.

2. Verfahren nach Anspruch 1,
bei dem folgender Schritt ausgeführt wird:
Bereitstellen der Abfragefunktion (AF) mittels einer besonderen Werteausprägung (VSP) der Werteausprägung (V1) des Elements (MSR).

3. Verfahren nach Anspruch 2,
bei dem ein Inhalt der besonderen Werteausprägung (VSP) entweder je Element (MSR, ACC) spezifisch oder für alle Elemente (MSR, ACC) einheitlich gewählt wird.

4. Verfahren nach einem der Ansprüche 2 oder 3,
bei dem dem Element (MSR) ein drittes Attribut (AT3) derart zugeordnet wird, dass das dritte Attribut (AT3) die besondere Werteausprägung (VSP) explizit angibt.

5. Verfahren nach der Anspruch 1,
bei dem folgender Schritt ausgeführt wird:
Bereitstellen der Abfragefunktion (AF) mittels eines ersten Attributs (AT1) des Elements (MSR).

6. Verfahren nach einem der vorangehenden Ansprüche,
bei dem zur Spezifizierung einer Ausführung der Abfragefunktion (AF) das Element (MSR) des Schemas (SC) um zumindest ein zweites Attribut (AT2) ergänzt wird.

7. Verfahren nach Anspruch 6,
bei dem durch das zumindest eine zweite Attribut (AT2) eine Anzahl an Ebenen in dem durch die Elemente (SID, MSR, ACC, VAL, MAN, COM, YEA, KN) des ersten strukturierten Dokuments (DOC1) aufgespannten Baum signalisiert wird, für die die Wertausprägungen als Wert der Parameter zurückgegeben werden sollen.

8. Verfahren nach einem der vorangehenden Ansprüche,
bei dem eine Antwort auf die Abfrage des Wertes (W1) mittels eines zweiten strukturierten Dokuments (DOC2) durchgeführt wird, das auf Basis des Schemas (SC) erzeugt wird und zumindest die zu dem zumindest einen Wert (W1) korrespondierende Werteausprägung (V1) zusammen mit dem dazugehörigen Element (MSR) aufweist.

9. Verfahren nach einem der Ansprüche 1 bis 8,
bei dem zumindest eines der strukturierten Dokumente (DOC1, DOC2) in textueller Form (TF) erzeugt wird.

10. Verfahren nach einem der Ansprüche 1 bis 8,
bei dem zumindest eines der strukturierten Dokumente (DOC1, DOC2) entweder (i) in binärer Form (BF) oder (ii) zunächst textueller Form (TF) und dann durch Kodierung mittels eines Text-zu-Binär Kodierers (COD) in binärer Form (BF) erzeugt wird, wobei die binäre Form (BF) insbesondere nach einem der Standards BIM oder EXI realisiert wird.

11. Verfahren nach einem der vorangehenden Ansprüche,
bei dem zumindest eines der strukturierten Dokumente (DOC1, DOC2) und/oder das Schema (SC) gemäß der Beschreibungssprache XML erzeugt wird.

12. Verfahren zum Herstellen eines Schemas (SC) zum Abfragen zumindest eines Wertes (W1, W2) zumindest eines Parameters (P1, P2) eines Moduls (MOD), wobei mittels eines Basisschemas (BSC) der zumindest eine Parameter (P1, P2) als Element (MSR, VAL) beschreibbar ist und mittels einer Werteausprägung (V1, V2) des Elements (MSR, VAL) zumindest einer der Parameter (P1, P2) konfiguriert werden kann
**dadurch gekennzeichnet, dass**
das Schema (SC) durch Ergänzen des Basisschemas (BSC) um eine Abfragefunktion (AF) derart erzeugt wird, dass das Element (MSR) des zumindest einen Parameters (P1), dessen zumindest eine Wert (W1) abgefragt werden soll, mittels der Abfragefunktion (AF) markierbar ist.

13. Verfahren nach Anspruch 12,
bei dem zumindest einer der Verfahrenschritte gemäß einem der Ansprüche 2 bis 6 bei dem Herstellen des Schemas (SC) durchgeführt wird.

14. Vorrichtung (DEV) zum Abfragen zumindest eines Wertes (W1, W2) zumindest eines Parameters (P1, P2) von einem Modul (MOD), wobei mittels eines Basisschemas (BSC) der zumindest eine Parameter (P1, P2) als Element (MSR, VAL) beschreibbar ist und mittels einer Werteausprägung (V1, V2) des Elements (MSR, VAL) zumindest einer der Parameter (P1, P2) konfiguriert werden kann,
mit folgenden Mitteln (M1, M2, M3):
- Erstes Mittel (M1) zum Generieren eines Schemas (SC) durch Ergänzen des Basisschemas (BSC) um eine Abfragefunktion (AF) derart, dass das Element (MSR) des zumindest einen Parameters (P1), dessen zumindest eine Wert (W1) abgefragt werden soll, mittels der Abfragefunktion (AF) markierbar ist;
- Zweites Mittel (M2) zum Erzeugen eines ersten strukturierten Dokuments (DOC1) auf Basis des Schemas (SC) derart, dass das erste strukturierte Dokument (DOC1) sowohl zumindest dasjenige Element (MSR) für den zumindest einen Parameter (P1) aufweist, dessen zumindest eine Wert (W1) abgefragt werden soll, als auch diesem Element (MSR) die Abfragefunktion (AF) zuordnet;
- Drittes Mittel (M3) zum Abfragen des zumindest einen Wertes (W1) des zumindest einen Parameters (P1) mittels des ersten strukturierten Dokuments (DOC1), wobei der zumindest eine Parameter (P1) aufgrund der Abfragefunktion (AF) dem Modul (MOD) mitteilbar und der zumindest eine Wert (W1) des zumindest einen Parameters (P1) hieraufhin auslesbar ist.

15. Vorrichtung (DEV) gemäß Anspruch 14,
bei dem die Vorrichtung (DEV) über zumindest ein viertes Mittel (M4) verfügt, das derart ausgestaltet ist, dass damit zumindest einer der Verfahrensschritte gemäß einem der Ansprüche 2 bis 11 durchführbar ist.

16. Verfahren zum Bereitstellen zumindest eines Wertes (W1) zumindest eines Parameters (P1) durch ein Modul (MOD), wobei mittels eines Basisschemas (BSC) der zumindest eine Parameter (P1, P2) als Element (MSR, VAL) beschreibbar ist und mittels einer Werteausprägung (V1, V2) des Elements (MSR, VAL) zumindest einer der Parameter (P1, P2) konfiguriert werden kann, mit folgenden Schritten:
- Empfangen eines ersten strukturierten Dokuments (DOC1) auf Basis eines Schemas (SC), wobei das Schema (SC) durch Ergänzen des Basisschemas (BSC) um eine Abfragefunktion (AF) derart generiert wird, dass das Element (MSR) des zumindest einen Parameters (P1), dessen zumindest eine Wert (W1) abgefragt werden soll, mittels der Abfragefunktion (AF) markierbar ist und das erste strukturierte Dokument (DOC1) sowohl zumindest dasjenige Element (MSR) für den zumindest einen Parameter (P1) aufweist, dessen zumindest eine Wert (W1) abgefragt werden soll, als auch diesem Element (MSR) die Abfragefunktion (AF) zuordnet;
- Bereitstellen des zumindest einen Wertes (W1) des zumindest einen Parameters (P1) aufgrund des Empfangs des ersten strukturierten Dokuments (DOC1) derart, dass aufgrund der Abfragenfunktion (AF) das Element (MSR) und der zu dem Element (MSR) korrespondierende Parameter (P1) ermittelt und der zumindest eine Wert (W1) des zumindest einen Parameters (P1) insbesondere in Form eines zweiten strukturierten Dokuments (DOC2), bereitgestellt wird.

17. Verfahren nach Anspruch 16,
bei dem die Abfragefunktion (AF) mittels einer besonderen Werteausprägung (VSP) der Werteausprägung (V1) des Elements (MRS) ermittelt wird.

18. Verfahren nach Anspruch 17,
bei dem ermittelt wird, ob ein Inhalt der besonderen Werteausprägung (VSP) entweder je Element (MRS) spezifisch oder für alle Elemente (MRS) einheitlich gewählt ist.

19. Verfahren nach einem der Ansprüche 17 der 18,
bei dem anhand eines dem Element (MSR) zugeordneten dritten Attributs (AT3) die besondere Werteausprägung (VSP)ermittelt wird.

20. Verfahren nach Anspruch 16,
bei dem die Abfragefunktion (AF) mittels eines ersten Attributs (AT1) des Elements (MSR) ermittelt wird.

21. Verfahren nach einem der Ansprüche 16 bis 18,
bei dem ermittelt wird, ob zur Spezifizierung einer Ausführung der Abfragefunktion (AF) das Element (MSR) des Schemas (SC) um zumindest ein zweites Attribut (AT2) ergänzt ist.

22. Verfahren nach Anspruch 21,
bei dem ermittelt wird, ob durch das zumindest eine zweite Attribut (AT2) eine Anzahl an Ebenen in dem durch die Elemente (SID, MSR, ACC, VAL, MAN, COM, YEA, KN) des ersten strukturierten Dokuments (DOC1) aufgespannten Baum signalisiert wird, für die die Wertausprägungen als Wert der Parameter zurückgegeben werden sollen.

23. Verfahren nach einem der Ansprüche 16 bis 22,
bei dem eine Antwort auf die Abfrage des zumindest eines Wertes (W1) mittels eines zweiten strukturierten Dokuments (DOC2) durchgeführt wird, das auf Basis des Schemas (SC) erzeugt wird und zumindest die zu dem zumindest einen Wert (W1) korrespondierende Werteausprägung (V1) zusammen mit dem dazugehörigen Element (MSR) aufweist.

24. Verfahren nach einem der Ansprüche 16 bis 23,
bei dem zumindest das zweite strukturierte Dokument (DOC2) in textueller Form (TF) erzeugt wird.

25. Verfahren nach einem der Ansprüche 16 bis 23,
bei dem zumindest eines der strukturierten Dokumente (DOC1, DOC2) entweder (i) in binärer Form (BF) oder (ii) zunächst in textueller Form (TF) und dann durch Kodierung mittels eines Text-zu-Binär Kodierers (COD) in binärer Form (BF) erzeugt wird, wobei die binäre Form (BF) insbesondere nach einem der Standards BIM oder EXI realisiert wird.

26. Verfahren nach einem der Ansprüche 16 bis 25,
bei dem zumindest eines der strukturierten Dokumente (DOC1, DOC2) und/oder das Schema (SC) gemäß der Beschreibungssprache XML erzeugt wird.

27. Modul (MOD) zum Bereistellen zumindest eines Wertes (W1) zumindest eines Parameters (P1), wobei mittels eines Basisschemas (BSC) der zumindest eine Parameter (P1, P2) als Element (MSR, VAL) beschreibbar ist und mittels einer Werteausprägung (V1, V2) des Elements (MSR, VAL) zumindest einer der Parameter (P1, P2) konfiguriert werden kann, mit folgenden Einheiten (E1, E2):
- Erste Einheit (E1) zum Empfangen eines ersten strukturierten Dokuments (DOC1) auf Basis eines Schemas (SC), wobei das Schema (SC) durch Ergänzen des Basisschemas (BSC) um eine Abfragefunktion (AF) derart generiert wird, dass das Element (MSR) des zumindest einen Parameters (P1), dessen zumindest eine Wert (W1) abgefragt werden soll, mittels der Abfragefunktion (AF) markierbar ist und das erste strukturierte Dokument (DOC1) sowohl zumindest dasjenige Element (MSR) für den zumindest einen Parameter (P1) aufweist, dessen zumindest eine Wert (W1) abgefragt werden soll, als auch diesem Element (MSR) die Abfragefunktion (AF) zuordnet;
- Zweite Einheit (E2) zum Bereitstellen des zumindest einen Wertes (W1) des zumindest einen Parameters (P1) aufgrund des Empfangs des ersten strukturierten Dokuments (DOC1) derart, dass aufgrund der Abfragefunktion (AF) das Element (MSR) und der zu dem Element (MSR) korrespondierende Parameter (P1) ermittelt und der zumindest eine Wert (W1) des zumindest einen Parameters (P1), insbesondere in Form eines zweiten strukturierten Dokuments (DOC2), bereitgestellt wird.

28. Modul (MOD) gemäß Anspruch 27,
bei dem das Modul (MOD) über zumindest eine dritte Einheit (E3) verfügt, die derart ausgestaltet ist, dass damit zumindest einer der Verfahrensschritte zumindest einer der Ansprüche 16 bis 26 durchführbar ist.
